# EUROPEAN PATENT APPLICATION

(11) **EP 4 703 979 A1**
(43) Date of publication of application: **04.03.2026**
(21) Application number: 23935273.5
(22) Date of filing: 25.04.2023
(51) Int. Cl.: G06N 10/40

(54) **QUANTUM COMPUTING DEVICE AND METHOD FOR MANUFACTURING QUANTUM COMPUTING DEVICE**

(71) Applicant: FUJITSU LIMITED, Kawasaki-shi, Kanagawa 211-8588 (JP)
(72) Inventor: SHIMANOUCHI, Takeaki, Kawasaki-shi, Kanagawa 211-8588 (JP)
(74) Representative: Haseltine Lake Kempner LLP
(86) International application number: PCT/JP2023/016366
(87) International publication number: WO 2024/224493

(57) **Abstract**

A quantum computing device includes a first quantum bit substrate and a first relay substrate which are stacked. The first quantum bit substrate includes a first quantum bit, a first electrode, a second electrode, and a third electrode. The first relay substrate includes a first wiring that is connected to the first electrode and to which a control signal for controlling the first quantum bit is input, a second wiring that is connected to the second electrode and that is for reading a response signal indicating a quantum state of the first quantum bit, and a first capacitor that is connected to the third electrode and that is for capacitively coupling the first quantum bit and a second quantum bit.

## Description

### FIELD

The technology of the disclosure relates to a quantum computing device including a quantum bit substrate provided with a quantum bit, and a method of manufacturing the same.

### BACKGROUND

The following techniques are known as techniques relating to quantum computing devices. For example, Patent Literature 1 discloses a quantum computer in which two or more sets of a device layer including plural devices including a Josephson device and a ground layer in which a first conductor is disposed to face the device layer are provided.

### Prior Art Document

### Patent Literature

Patent Literature 1: Japanese Patent Application Laid-Open (JP-A) No. 2018-011266

### SUMMARY OF INVENTION

### Technical Problem

As a quantum bit (qubit) configuring a quantum computing device, a quantum bit employing a transmon is known. A transmon has a configuration in which a superconducting Josephson device and a capacitor are connected in parallel, and performs quantum computation using non-linear energy. In a multi-bit quantum computing device, plural quantum bits are connected to each other via a capacitor. In a configuration in which plural quantum bits are formed on a surface of a single substrate, the number of quantum bits that can be formed is restricted by limitations on the layout of the substrate on which the quantum bits are mounted.

Accordingly, a configuration may be considered in which plural quantum bit substrates respectively provided with quantum bits are stacked, and the quantum bits provided at the quantum bit substrates that are adjacent to each other in the stacking direction are connected together via a capacitor. Namely, by forming capacitive coupling not only in the planar direction of the quantum bit substrate but also between adjacent quantum bits in the stacking direction, it is possible to increase the number of bits without being subject to limitations on the layout of the quantum bit substrate. However, in order to realize quantum computation using a quantum bit, it is necessary to input a control signal for controlling the quantum bit and to read a response signal indicating the quantum state of the quantum bit. Namely, a configuration is required that enables access to the quantum bit provided at each of the plural stacked quantum bit substrates.

The technology of the disclosure has been made in consideration of the above-mentioned points, and an object thereof is to enable access to a quantum bit provided at each of plural stacked quantum bit substrates.

### Solution to Problem

A quantum computing device according to the technology of the disclosure includes a first quantum bit substrate and a first relay substrate which are stacked. The first quantum bit substrate includes a first quantum bit, a first electrode, a second electrode, and a third elec trode. The first relay substrate includes first wiring that is connected to the first electrode and to which a control signal for controlling the first quantum bit is input, second wiring that is c onnected to the second electrode and that is for reading a response signal indicating a quantu m state of the first quantum bit, and a first capacitor that is connected to the third electrode a nd that is for capacitively coupling the first quantum bit and a second quantum bit. Advantageous Effects of Invention

The technology of the disclosure enables access to a quantum bit provided at each of the plural stacked quantum bit substrates.

### BRIEF DESCRIPTION OF DRAWINGS

Fig. 1 is an equivalent circuit diagram illustrating an example of a configuration of an arithmetic unit according to an exemplary embodiment of the technology of the disclosure.
Fig. 2 is a top view illustrating an example of a configuration of a quantum bit substrate according to an exemplary embodiment of the technology of the disclosure.
Fig. 3 is a top view illustrating, in an enlarged manner, one of the plural unit structures illustrated in Fig. 2.
Fig. 4 is a perspective view schematically illustrating a configuration of a quantum computing device according to an exemplary embodiment of the technology of the disclosure.
Fig. 5A is a cross-sectional view illustrating an example of a configuration of a quantum computing device according to an exemplary embodiment of the technology of the disclosure.
Fig. 5B is a cross-sectional view illustrating an example of a configuration of a quantum computing device according to an exemplary embodiment of the technology of the disclosure.
Fig. 6 is a cross-sectional view illustrating an example of a configuration of a capacitor provided at a relay substrate according to an exemplary embodiment of the technology of the disclosure.
Fig. 7 is a top view illustrating an example of a configuration of a quantum computing device according to an exemplary embodiment of the technology of the disclosure.
Fig. 8 is a top view illustrating a portion of Fig. 7 in an enlarged manner.
Fig. 9 is a cross-sectional view taken along line 9-9 in Fig. 8.
Fig. 10 is a cross-sectional view illustrating another example of a configuration of a quantum computing device according to an exemplary embodiment of the technology of the disclosure.
Fig. 11 is a cross-sectional view taken along line 11-11 in Fig. 10.
Fig. 12A is a cross-sectional view illustrating an example of a method of manufacturing a quantum bit substrate according to an exemplary embodiment of the technology of the disclosure.
Fig. 12B is a cross-sectional view illustrating an example of a method of manufacturing a quantum bit substrate according to an exemplary embodiment of the technology of the disclosure.
Fig. 12C is a cross-sectional view illustrating an example of a method of manufacturing a quantum bit substrate according to an exemplary embodiment of the technology of the disclosure.
Fig. 12D is a cross-sectional view illustrating an example of a method of manufacturing a quantum bit substrate according to an exemplary embodiment of the technology of the disclosure.
Fig. 12E is a cross-sectional view illustrating an example of a method of manufacturing a quantum bit substrate according to an exemplary embodiment of the technology of the disclosure.
Fig. 12F is a cross-sectional view illustrating an example of a method of manufacturing a quantum bit substrate according to an exemplary embodiment of the technology of the disclosure.
Fig. 12G is a cross-sectional view illustrating an example of a method of manufacturing a quantum bit substrate according to an exemplary embodiment of the technology of the disclosure.
Fig. 12H is a cross-sectional view illustrating an example of a method of manufacturing a quantum bit substrate according to an exemplary embodiment of the technology of the disclosure.
Fig. 13 is a cross-sectional view illustrating a configuration of a quantum computing device according to another exemplary embodiment of the technology of the disclosure.
Fig. 14 is a cross-sectional view illustrating a configuration of a quantum computing device according to another exemplary embodiment of the technology of the disclosure.
Fig. 15 is a top view illustrating a configuration of a quantum computing device according to another exemplary embodiment of the technology of the disclosure.
Fig. 16 is a cross-sectional view taken along line 16-16 in Fig. 15.
Fig. 17A is a cross-sectional view illustrating an example of a configuration of a quantum computing device according to another exemplary embodiment of the technology of the disclosure.
Fig. 17B is a cross-sectional view illustrating an example of a configuration of a quantum computing device according to another exemplary embodiment of the technology of the disclosure.

### DESCRIPTION OF EMBODIMENTS

Explanation follows regarding an example of an exemplary embodiment of the technology of the disclosure, with reference to the drawings. Note that the same reference numerals are allocated to the same or equivalent components and portions in the drawings, and duplicate explanation thereof is omitted.

### First Exemplary Embodiment

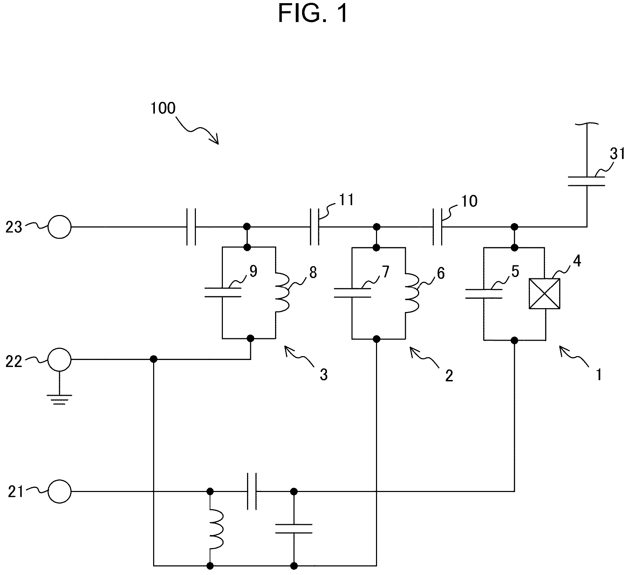

Fig. 1 is an equivalent circuit diagram illustrating an example of a configuration of an arithmetic unit 100 that configures a quantum computing device according to an exemplary embodiment of the technology of the disclosure. Plural arithmetic units 100 are integrated in the quantum computing device. The arithmetic unit 100 includes a quantum bit 1, a resonator 2, and a filter 3.

The quantum bit 1 is a device that forms a coherent two-level system using superconductivity and performs quantum computation using non-linear energy. The quantum bit 1 includes a transmon quantum bit circuit in which a superconducting Josephson device 4 and a capacitor 5 are connected in parallel. The superconducting Josephson device 4 includes a pair of superconductors that exhibit superconductivity at a temperature less than or equal to a predetermined critical temperature, and an ultrathin insulator with a thickness of about several nm which is sandwiched between the pair of superconductors. The superconductors may be, for example, aluminum, and the insulator may be, for example, aluminum oxide.

The resonator 2 is connected to the quantum bit 1 via a capacitor 10. The resonator 2 interacts with the quantum bit 1 to read a response signal indicating the quantum state of the quantum bit 1. The resonator 2 includes a resonant circuit in which a superconducting inductor 6 and a capacitor 7 are connected in parallel. The filter 3 is connected to the resonator 2 via a capacitor 11. The filter 3 removes noise components included in the response signal indicating the quantum state of the quantum bit 1. Similarly to the resonator 2, the filter 3 includes a resonant circuit in which a superconducting inductor 8 and a capacitor 9 are connected in parallel.

A control electrode 21, a ground electrode 22, and a read electrode 23 are connected to the arithmetic unit 100. A control signal for controlling the quantum bit 1 is input to the control electrode 21. The quantum state of the quantum bit 1 is controlled by the control signal input to the control electrode 21. The response signal indicating the quantum state of the quantum bit 1 is read from the read electrode 23. A ground potential is applied to the ground electrode 22 from outside. The ground potential applied to the ground electrode 22 is supplied to various sections of the arithmetic unit 100.

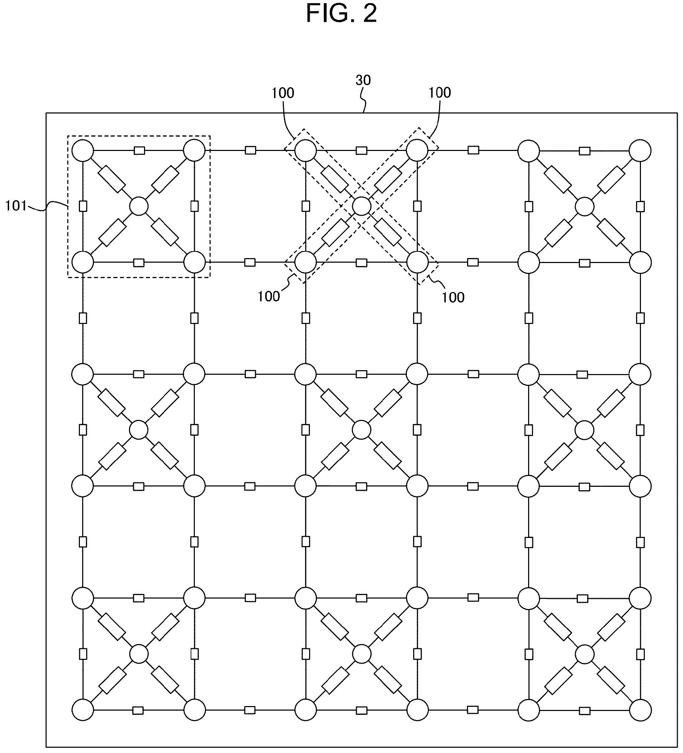

The quantum computing device includes a quantum bit substrate provided with plural arithmetic units 100. Fig. 2 is a top view illustrating an example of a configuration of a quantum bit substrate 30 configuring the quantum computing device according to an exemplary embodiment of the technology of the disclosure. The quantum bit substrate 30 includes plural unit structures 101 each including four arithmetic units 100.

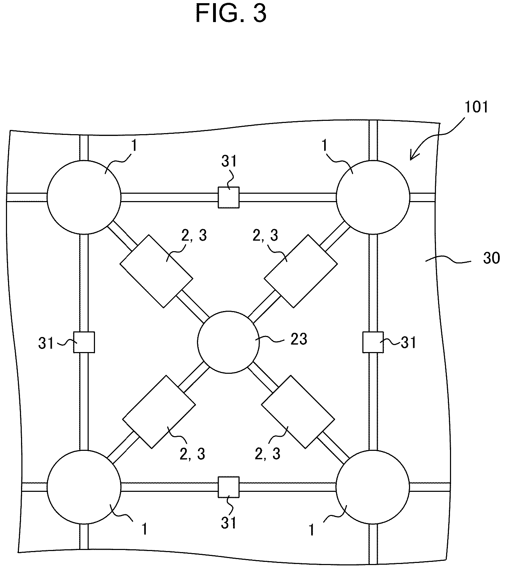

Fig. 3 is a diagram illustrating, in an enlarged manner, one of the plural unit structures 101 illustrated in Fig. 2. The four quantum bits 1 configuring one unit structure 101 are disposed at positions corresponding to the four vertices of a square, and the read electrode 23 is disposed at the center of the square. One read electrode 23 is shared by the four arithmetic units 100. The resonator 2 and the filter 3 are provided on respective paths extending from the four quantum bits 1 to the read electrode 23. The respective quantum bits 1 are connected to other adjacent quantum bits 1 via a capacitor 31. As a result, each quantum bit performs a quantum computation by creating a quantum entanglement state with another adjacent quantum bit 1.

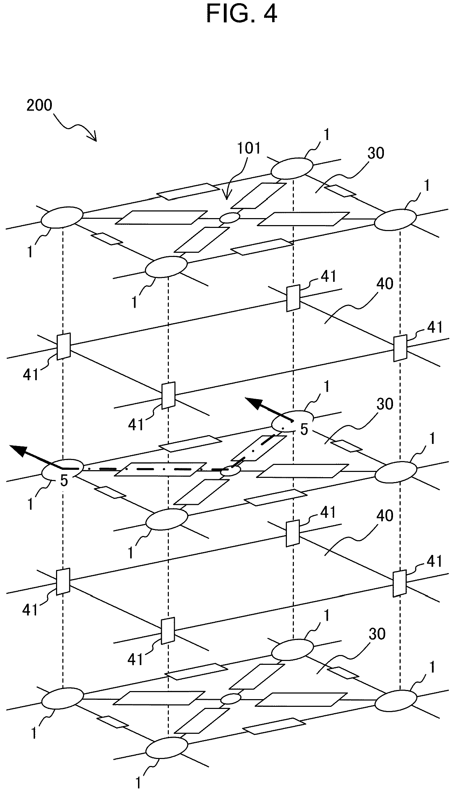

The quantum computing device has a configuration in which plural quantum bit substrates are stacked, and quantum bits provided at mutually different quantum bit substrates are connected together via a capacitor. Fig. 4 is a perspective view schematically illustrating a configuration of a quantum computing device 200 according to an exemplary embodiment of the technology of the disclosure. The quantum computing device 200 is configured by alternately stacking a quantum bit substrate 30 and a relay substrate 40. Namely, plural quantum bit substrates 30 are stacked in a state in which the relay substrate 40 is sandwiched therebetween. Among the quantum bits 1 provided at the mutually different quantum bit substrates 30, those that are adjacent to each other in the stacking direction of the quantum bit substrates 30 are connected to each other via a capacitor 41 provided at the relay substrate 40.

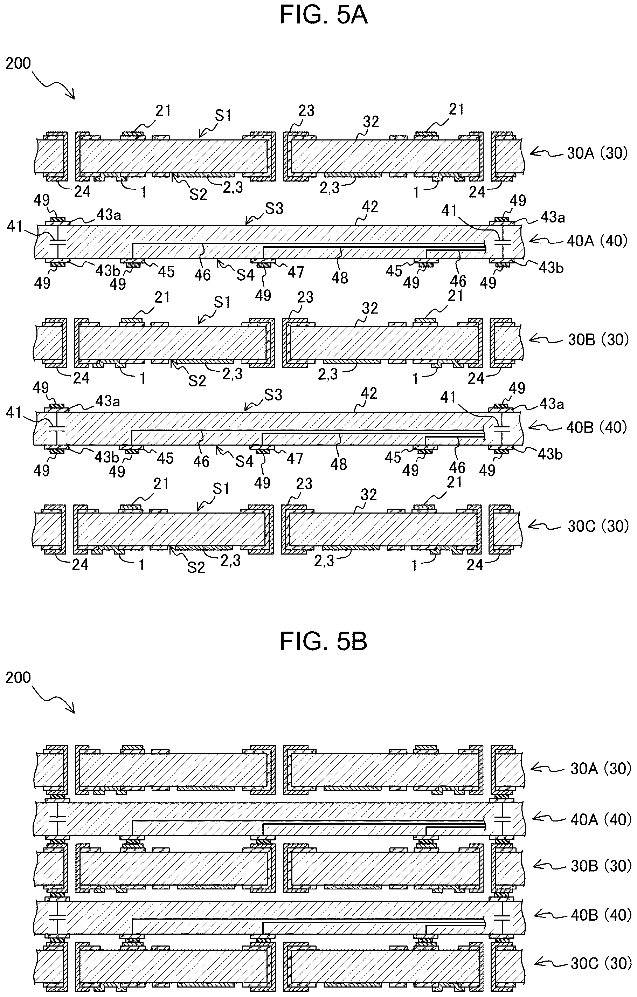

Fig. 5A and Fig. 5B are cross-sectional views illustrating an example of a configuration of the quantum computing device 200 according to an exemplary embodiment of the technology of the disclosure. The cross-section illustrated in Fig. 5A and Fig. 5B corresponds to a cross-section taken along the line 5-5 in Fig. 4. Fig. 5A is an exploded view of the quantum bit substrate and the relay substrate, and Fig. 5B is a diagram illustrating a state in which the quantum bit substrate and the relay substrate are joined together.

Fig. 5A and Fig. 5B illustrate a configuration including three quantum bit substrates 30A, 30B, and 30C and two relay substrates 40A and 40B. The relay substrate 40A is provided between the quantum bit substrates 30A and 30B, and the relay substrate 40B is provided between the quantum bit substrates 30B and 30C. Note that the quantum computing device 200 may be configured including two quantum bit substrates and one relay substrate provided between these quantum bit substrates, or may be configured including four or more quantum bit substrates and three or more relay substrates. Hereinafter, the description, the quantum bit substrate 30, is used in cases in which the quantum bit substrates 30A, 30B, and 30C are not distinguished from each other or are collectively referred to. Similarly, the description, the relay substrate 40, is used in cases in which the relay substrates 40A and 40B are not distinguished from each other or are collectively referred to.

The quantum bit substrate 30 includes, for example, a silicon substrate as a base material 32. The control electrode 21 is provided at a first surface S1 of the base material 32, and the quantum bit 1, the resonator 2, and the filter 3 are provided at a second surface S2 of the base material 32. The quantum bit 1 is provided directly below the control electrode 21. The control signal input to the control electrode 21 acts on the quantum bit 1 via the base material 32. The read electrode 23 has a through electrode structure that penetrates through the base material 32. The response signal supplied via the resonator 2 and the filter 3 is transmitted to the first surface S1 of the base material 32 by the read electrode 23 having the through electrode structure. Moreover, a connection electrode 24 that is electrically connected to the quantum bit 1 is provided in the vicinity of each quantum bit 1. Each of the connection electrodes 24 has a through electrode structure. The connection electrode 24 having the through electrode structure causes the conductive path electrically connected to the quantum bit 1 to be drawn to the first surface S1 of the base material 32. This electrical connection may be a direct connection, or may be an indirect connection, such as inductive coupling or capacitive coupling.

Note that the quantum bit substrate 30B is an example of a "first quantum bit substrate" in the technology of the disclosure. The quantum bit substrate 30A is an example of a "second quantum bit substrate" in the technology of the disclosure. The quantum bit substrate 30C is an example of a "third quantum bit substrate" in the technology of the disclosure. The quantum bit 1 provided at the quantum bit substrate 30B is an example of a "first quantum bit" in the technology of the disclosure. The quantum bit 1 provided at the quantum bit substrate 30A is an example of a "second quantum bit" in the technology of the disclosure. The quantum bit 1 provided at the quantum bit substrate 30C is an example of a "third quantum bit" in the technology of the disclosure. The control electrode 21 is an example of a "first electrode" in the technology of the disclosure. The read electrode 23 is an example of a "second electrode" in the technology of the disclosure. The connection electrode 24 is an example of a "third electrode" in the technology of the disclosure.

The relay substrate 40 includes, for example, a low-temperature co-fired ceramic (LTCC) or a high-temperature co-fired ceramic (HTCC) as a base material 42. The relay substrate 40 includes a pair of capacitor electrodes 43a and 43b provided at a position corresponding to the formation position of the connection electrode 24 of the quantum bit substrate 30. The capacitor electrodes 43a and 43b are opposed to each other with the base material 42 interposed therebetween. The relay substrate 40 includes the capacitor 41 formed inside the base material 42, one end of the capacitor 41 is connected to the capacitor electrode 43a, and another end of the capacitor 41 is connected to the capacitor electrode 43b.

The relay substrate 40 includes a control wiring electrode 45 provided at a position corresponding to the formation position of the control electrode 21 of the quantum bit substrate 30. The relay substrate 40 includes control wiring 46 formed inside the base material 42, and the control wiring 46 is connected to the control wiring electrode 45.

The relay substrate 40 includes a read wiring electrode 47 provided at a position corresponding to the formation position of the read electrode 23 of the quantum bit substrate 30. The relay substrate 40 includes read wiring 48 formed inside the base material 42, and the read wiring 48 is connected to the read wiring electrode 47.

In the relay substrate 40, the capacitor electrode 43a is provided at a first surface S3 of the base material 42, and the capacitor electrode 43b, the control wiring electrode 45, and the read wiring electrode 47 are provided at a second surface S4 of the base material 42.

The quantum bit substrate 30A is disposed at a side of the first surface S3 of the relay substrate 40A, and the quantum bit substrate 30B is disposed at a side of the second surface S4 of the relay substrate 40A. The quantum bit substrate 30B is disposed at a side of the first surface S3 of the relay substrate 40B, and the quantum bit substrate 30C is disposed at a side of the second surface S4 of the relay substrate 40B.

The connection electrode 24 of the quantum bit substrate 30A is joined to the capacitor electrode 43a of the relay substrate 40A via a bump 49. The connection electrode 24 of the quantum bit substrate 30B is joined to the capacitor electrode 43b of the relay substrate 40A via a bump 49. As a result, the quantum bit 1 provided at the quantum bit substrate 30A and the quantum bit 1 provided at the quantum bit substrate 30B are connected to each other via the capacitor 41 provided at the relay substrate 40A. The control electrode 21 of the quantum bit substrate 30B is joined to the control wiring electrode 45 of the relay substrate 40A via a bump 49. The control electrode 21 of the quantum bit substrate 30B is thereby connected to the control wiring 46 provided at the relay substrate 40A. The read electrode 23 of the quantum bit substrate 30B is joined to the read wiring electrode 47 of the relay substrate 40A via a bump 49. The read electrode 23 of the quantum bit substrate 30B is thereby connected to the read wiring 48 provided at the relay substrate 40A.

Similarly, the connection electrode 24 of the quantum bit substrate 30B is joined to the capacitor electrode 43a of the relay substrate 40B via a bump 49. The connection electrode 24 of the quantum bit substrate 30C is joined to the capacitor electrode 43b of the relay substrate 40B via a bump 49. As a result, the quantum bit 1 provided at the quantum bit substrate 30B and the quantum bit 1 provided at the quantum bit substrate 30C are connected to each other via the capacitor 41 provided at the relay substrate 40B. The control electrode 21 of the quantum bit substrate 30C is joined to the control wiring electrode 45 of the relay substrate 40B via a bump 49. The control electrode 21 of the quantum bit substrate 30C is thereby connected to the control wiring 46 provided at the relay substrate 40B. The read electrode 23 of the quantum bit substrate 30C is joined to the read wiring electrode 47 of the relay substrate 40B via a bump 49. The read electrode 23 of the quantum bit substrate 30C is thereby connected to the read wiring 48 provided at the relay substrate 40B.

Note that the relay substrate 40A is an example of a "first relay substrate" in the technology of the disclosure. The relay substrate 40B is an example of a "second relay substrate" in the technology of the disclosure. The control wiring 46 is an example of "first wiring" in the technology of the disclosure. The read wiring 48 is an example of "second wiring" in the technology of the disclosure. The capacitor 41 provided at the relay substrate 40A is an example of a "first capacitor" in the technology of the disclosure. The capacitor 41 provided in the relay substrate 40B is an example of a "second capacitor" in the technology of the disclosure.

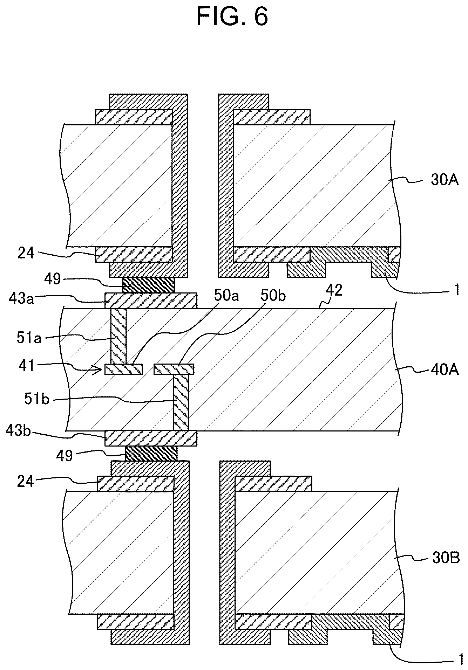

Fig. 6 is a cross-sectional view illustrating an example of a configuration of the capacitor 41 provided at the relay substrate 40. The capacitor 41 includes conductors 50a and 50b provided, separated by a gap, at a wiring layer inside the base material 42. The conductor 50a is connected to the capacitor electrode 43a via a via 51a, and the conductor 50b is connected to the capacitor electrode 43b via a via 51b.

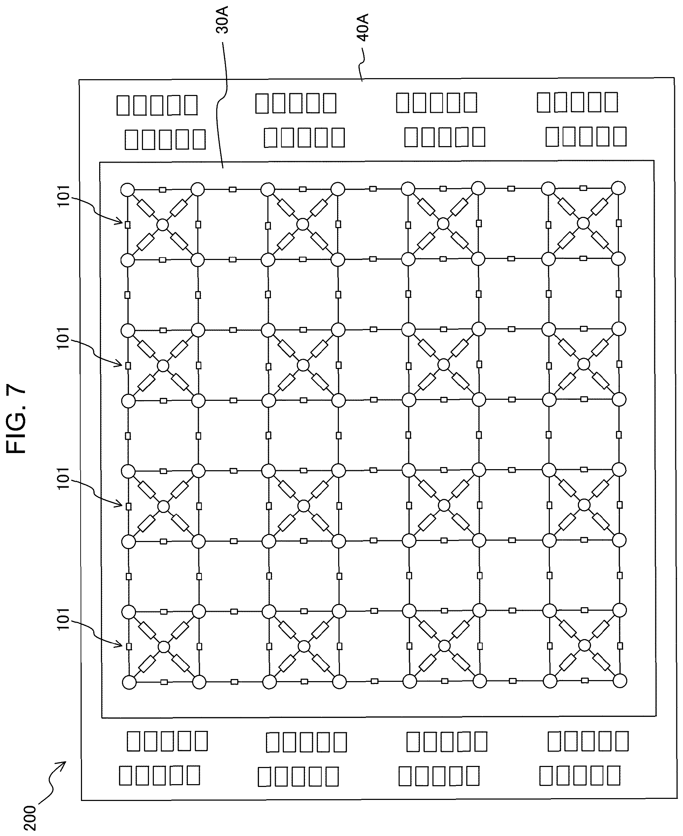

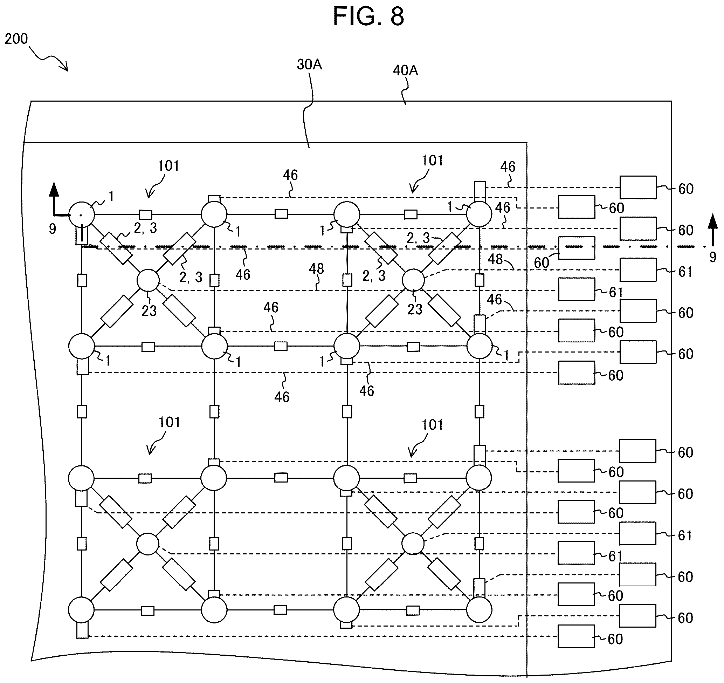

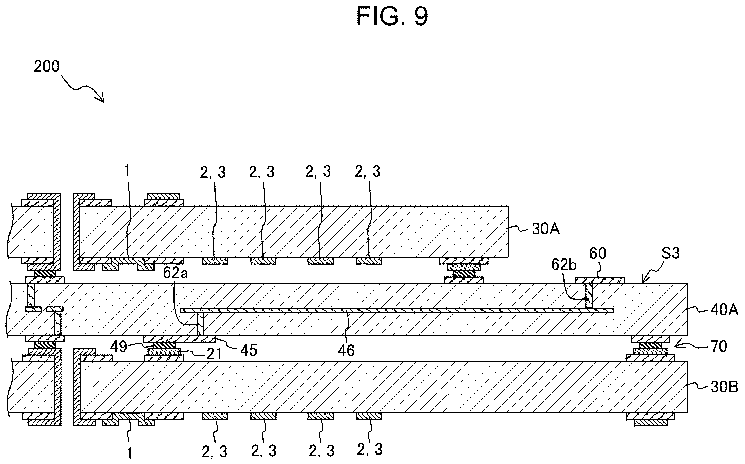

Fig. 7 is a top view illustrating an example of a configuration of the quantum computing device 200. Fig. 8 is a top view illustrating a portion of Fig. 7 in an enlarged manner. Fig. 9 is a cross-sectional view taken along line 9-9 in Fig. 8. Note that Fig. 7 to Fig. 9 illustrate a configuration in which the quantum computing device 200 includes two quantum bit substrates 30A, 30B, and one relay substrate 40A provided between these quantum bit substrates.

The size of the relay substrate 40A is larger than that of the quantum bit substrate 30A. Accordingly, the relay substrate 40A includes a portion that protrudes further toward an outer side, in the planar direction, than an outer edge of the quantum bit substrate 30A. The size of the quantum bit substrate 30B is, for example, approximately the same as that of the relay substrate 40A.

The control wiring 46 and the read wiring 48 provided inside the relay substrate 40A each extend to the portion of the relay substrate 40A which protrudes further toward the outer side, in the planar direction, than the outer edge of the quantum bit substrate 30A. Plural input electrodes 60 and plural output electrodes 61 are provided at the first surface S3 at the protruding portion. The plural input electrodes 60 correspond to each of the control wirings 46, and the plural output electrodes 61 correspond to each of the read wirings 48. Each of the control wirings 46 is connected at one end to a corresponding control wiring electrode 45 via a via 62a, and at another end to a corresponding input electrode 60 via a via 62b. Each of the lead wirings 48 is connected at one end to a corresponding read wiring electrode 47 via a via (not illustrated in the drawings) and at another end to a corresponding output electrode 61 via a via (not illustrated in the drawings).

A control signal for controlling the quantum bit 1 provided at the quantum bit substrate 30B is input to the input electrode 60. The control signal input to the input electrode 60 is supplied to the control electrode 21 provided at the quantum bit substrate 30B via the control wiring 46. A response signal indicating the quantum state of the quantum bit 1 provided at the quantum bit substrate 30B is output from the output electrode 61 via the read wiring 48 provided at the relay substrate 40A. Namely, the quantum bit 1 provided at the quantum bit substrate 30B can be accessed via the input electrode 60 and the output electrode 61 provided at the relay substrate 40A. Providing the input electrode 60 and the output electrode 61 at the portion of the relay substrate 40A which protrudes further toward the outer side, in the planar direction, than the outer edge of the quantum bit substrate 30A facilitates external access to the quantum bit 1 provided at the quantum bit substrate 30B.

Fig. 8 illustrates an example of a layout in which eight input electrodes 60 and two output electrodes 61, corresponding to the eight arithmetic units included in the two unit structures 101, are arranged at an end portion of the relay substrate 40A in a state in which these electrodes are grouped together. The input electrodes 60 and the output electrodes 61 may be provided at the portion of the relay substrate 40A which protrudes further toward the outer side, in the planar direction, than the outer edge of the quantum bit substrate 30A, and the arrangement of these electrodes can be determined as appropriate.

The relay substrate 40A and the quantum bit substrate 30B are joined to each other via a dummy joining section 70 at the portion that protrudes further toward the outer side, in the planar direction, than the outer edge of the quantum bit substrate 30A. The dummy joining section 70 is intended for mechanical connection between the substrates, and is a joining section that does not form an electrical connection. This enables the risk of deterioration in connectivity between the substrates, or breakage of the joining section, due to bending of the respective substrates to be suppressed.

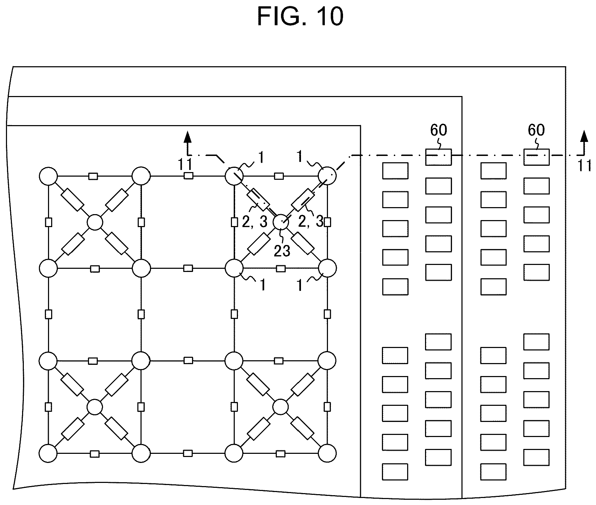

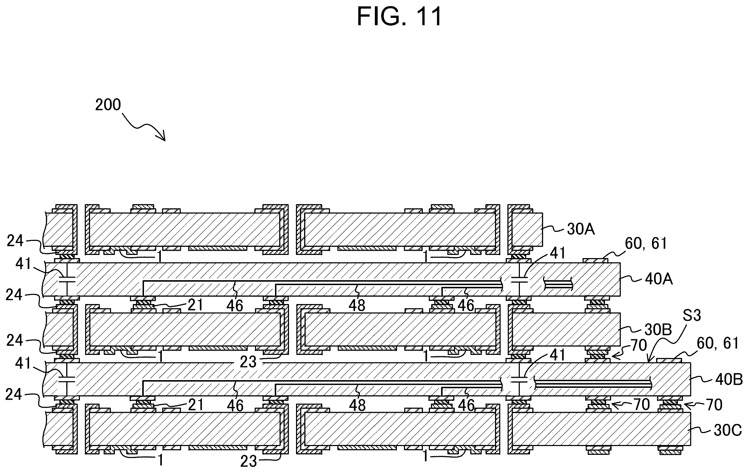

Fig. 10 is a cross-sectional view illustrating another example of a configuration of the quantum computing device 200. Fig. 11 is a cross-sectional view taken along line 11-11 in Fig. 10. Note that Fig. 10 and Fig. 11 exemplify a configuration in which the quantum computing device 200 includes three quantum bit substrates 30A, 30B, and 30C, and two relay substrates 40A and 40B respectively provided between these quantum bit substrates.

Since the sizes and the connection relationships of the quantum bit substrates 30A and 30B and the relay substrate 40A are similar to those illustrated in Fig. 7 to Fig. 9, duplicate explanation thereof is omitted. The size of the relay substrate 40B is larger than those of the relay substrate 40A and the quantum bit substrate 30B. Accordingly, the relay substrate 40B includes a portion that protrudes further toward the outer side, in the planar direction, than the outer edges of the relay substrate 40A and the quantum bit substrate 30B. The size of the quantum bit substrate 30C is, for example, approximately the same as that of the relay substrate 40B.

The control wiring 46 and the read wiring 48 provided inside the relay substrate 40B each extend to the portion of the relay substrate 40B which protrudes further toward the outer side, in the planar direction, than the outer edge of the quantum bit substrate 30B. Plural input electrodes 60 and plural output electrodes 61 are provided at the first surface S3 at the portion of the relay substrate 40B which protrudes further toward the outer side, in the planar direction, than the outer edge of the quantum bit substrate 30B. Namely, the input electrodes 60 and the output electrodes 61 provided at the relay substrate 40B are disposed further to the outer side in the planar direction than the input electrodes 60 and the output electrodes 61 provided at the relay substrate 40A . This enables access to the input electrodes 60 and the output electrodes 61 respectively provided at the relay substrates 40A and 40B without causing interference.

The relay substrate 40B and the quantum bit substrate 30B are connected to each other via a dummy joining section 70 at the portion that protrudes further toward the outer side, in the planar direction, than the outer edge of the quantum bit substrate 30A. The relay substrate 40B and the quantum bit substrate 30C are also connected to each other via a dummy joining section 70 at the portion that protrudes further toward the outer side, in the planar direction, than the outer edge of the quantum bit substrate 30A. This enables the risk of deterioration in connectivity between the substrates, or breakage of the joining section, due to bending of the respective substrates to be suppressed.

Note that even in a case in which the number of stacks of the quantum bit substrate 30 and the relay substrate 40 is further increased, the sizes of the respective substrates are configured to increase step by step along the stacking direction. The input electrodes 60 and the output electrodes 61 are provided at the portion of the relay substrate 40 which protrudes further toward the outer side, in the planar direction, than the outer edges of the respective substrates, each of which is relatively small in size.

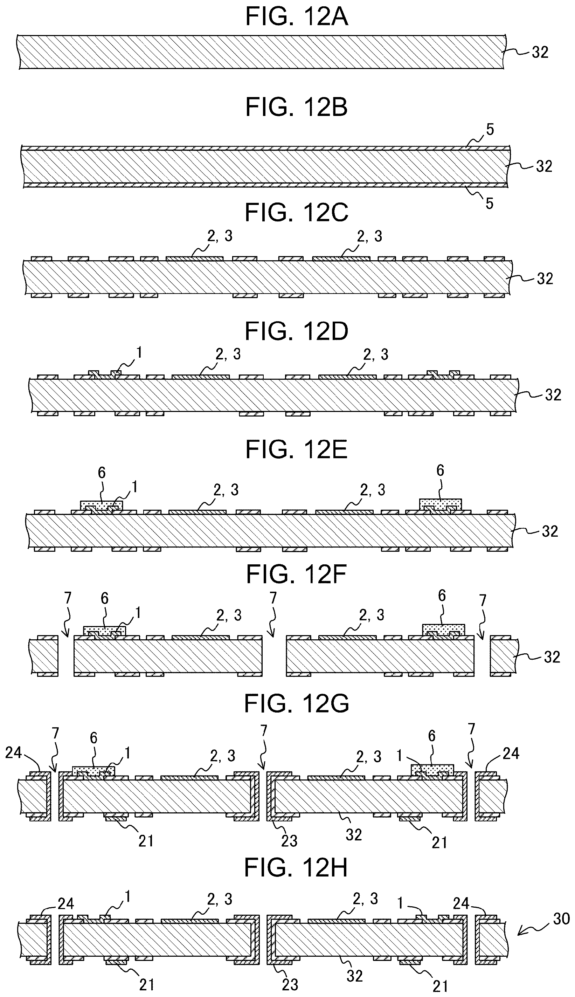

Explanation follows regarding a method of manufacturing the quantum computing device 200. Fig. 12A to Fig. 12H are cross-sectional views illustrating an example of a method of manufacturing the quantum bit substrate 30. First, the base material 32 of the quantum bit substrate 30 is prepared. For example, a silicon substrate with a thickness of about 300 µm can be used as the base 32 (Fig. 12A). Next, a conductive film 5 with a thickness of about 100 nm is formed on both sides of the base material 32 by, for example, a sputtering method, plasma chemical vapor deposition (CVD), or an ion plating method. For example, TiN can be used as a material for the conductive film 5 (Fig. 12B). Next, a resist mask (not illustrated in the drawings) is formed on a surface of the conductive film 5, and the conductive film 5 is patterned by partially etching the conductive film 5 via the resist mask. This forms the resonator 2, the filter 3, and the like (Fig. 12C).

Next, the quantum bit 1 is formed on the surface of the base material 32 (Fig. 12D). The superconducting Josephson device configuring the quantum bit 1 is formed by, for example, undergoing a process of forming a first electrode (not illustrated in the drawings) including Al on the surface of the base material 32 by a vapor deposition method, a process of using O₂ gas to form an ultrathin oxide film (not illustrated in the drawings) with a thickness of about several nm on the surface of the first electrode, and a process of forming a second electrode (not illustrated in the drawings) including Al on the surface of the oxide film by a vapor deposition method. Patterning of the first electrode and the second electrode may be performed by, for example, a lift-off method using a patterned resist mask (not illustrated in the drawings). In this case, an opening pattern of the resist mask may be a cross shape including a first linear portion along a first direction and a second linear portion along a second direction that is orthogonal to the first direction, and the first electrode may be formed at a portion corresponding to the first linear portion by performing vapor deposition while tilting the first direction as a rotation axis. Subsequently, the second electrode may be formed at a portion corresponding to the second linear portion by performing vapor deposition while tilting the second direction as the rotation axis. The above-described method enables patterning of the first electrode and the second electrode to be performed using a single resist mask.

Next, a protective film 6 is formed by, for example, CVD to cover the surface of the quantum bit 1. It is possible to use, for example, SiO₂ as a material for the protective film 6. Thereafter, patterning of the protective film 6 is performed using photolithography technology (Fig. 12E). Next, through holes 7 are respectively formed at formation positions of the connection electrodes 24 and the formation position of the read electrode 23 of the base material 32 by, for example, a deep reactive ion etching (RIE) method (Fig. 12F). Next, a conductive film is formed by, for example, a vapor deposition method so as to cover an inner wall of the through holes 7 and the periphery of the opening ends of the through holes 7. Al, for example, can be used as a material for the conductive film. Thereafter, patterning of the conductive film is performed by, for example, a lift-off method. This forms the connection electrodes 24, the control electrodes 21, and the read electrode 23 (Fig. 12G). Next, the protective film 7 covering the quantum bit 1 is removed by etching using, for example, vapor hydrofluoric acid (Fig. 12H). The quantum bit substrate 30 is completed through the above processes.

The relay substrate 40 can be manufactured using, for example, a known manufacturing process of an LTCC multilayer substrate. Explanation of the details of the method of manufacturing the relay substrate 40 is omitted.

Explanation follows regarding joining between the quantum bit substrate 30 and the relay substrate 40, with reference to Fig. 5A and Fig. 5B. Bumps 49 are respectively formed on the surfaces of the capacitor electrodes 43a, 43b, the control wiring electrode 45, and the read wiring electrode 47 of the relay substrate 40. For example, In can be used as a material for the bumps 49. The bumps 49 are patterned by, for example, a lift-off method.

Next, the connection electrode 24 of the quantum bit substrate 30A and the capacitor electrode 43a of the relay substrate 40A are joined together via the bump 49. This enables the quantum bit substrate 30A and the relay substrate 40A to be joined together.

Next, the capacitor electrode 43b of the relay substrate 40A and the connection electrode 24 of the quantum bit substrate 30B, the control wiring electrode 45 of the relay substrate 40A and the control electrode 21 of the quantum bit substrate 30B, and the read wiring electrode 47 of the relay substrate 40A and the read electrode 23 of the quantum bit substrate 30B, are joined together via respective bumps 49. This enables the relay substrate 40A and the quantum bit substrate 30B to be joined together. The control electrode 21 of the quantum bit substrate 30B is connected to the control wiring 46 of the relay substrate 40A, and the read electrode 23 of the quantum bit substrate 30B is connected to the read wiring 48 of the relay substrate 40A. The quantum bit 1 provided at the quantum bit substrate 30A and the quantum bit 1 provided at the quantum bit substrate 30B are connected to each other via the capacitor 41 provided at the relay substrate 40A.

Next, the connection electrode 24 of the quantum bit substrate 30B and the capacitor electrode 43a of the relay substrate 40B are joined together via the bump 49. This enables the quantum bit substrate 30B and the relay substrate 40B to be joined together.

Next, the capacitor electrode 43b of the relay substrate 40B and the connection electrode 24 of the quantum bit substrate 30C, the control wiring electrode 45 of the relay substrate 40B and the control electrode 21 of the quantum bit substrate 30C, and the read wiring electrode 47 of the relay substrate 40B and the read electrode 23 of the quantum bit substrate 30C, are joined together via respective bumps 49. This enables the relay substrate 40B and the quantum bit substrate 30C to be joined together. The control electrode 21 of the quantum bit substrate 30C is connected to the control wiring 46 of the relay substrate 40B, and the read electrode 23 of the quantum bit substrate 30C is connected to the read wiring 48 of the relay substrate 40B. The quantum bit 1 provided at the quantum bit substrate 30B and the quantum bit 1 provided at the quantum bit substrate 30C are connected to each other via the capacitor 41 provided at the relay substrate 40B. For example, an ultrasonic joining method can be used to join the electrodes between the quantum bit substrate 30 and the relay substrate 40. Note that adjacent substrates may be joined together collectively in a state in which the plural quantum bit substrates 30 and the plural relay substrates 40 are alternately stacked.

As described above, the quantum computing device 200 according to the exemplary embodiment of the technology of the disclosure includes the stacked quantum bit substrate 30B and relay substrate 40A. The quantum bit substrate 30B includes the quantum bit 1, the control electrode 21 to which a control signal for controlling the quantum bit 1 is input, the read electrode 23 for reading a response signal indicating the quantum state of the quantum bit 1, and the connection electrode 24 electrically connected to the quantum bit 1. The relay substrate 40A includes the control wiring 46 connected to the control electrode 21, the read wiring 48 connected to the read electrode 23, and the capacitor 41 connected to the connection electrode 24. The quantum computing device 200 may further include the quantum bit substrate 30B that is provided sandwiching the relay substrate 40A between the quantum bit substrate 30 and that includes a quantum bit 1. The quantum bit 1 provided at the quantum bit substrate 30A is connected to the quantum bit 1 provided at the quantum bit substrate 30B via the capacitor 41 provided at the relay substrate 40A.

In the quantum computing device 200 according to the exemplary embodiment of the technology of the disclosure, the quantum bits 1 provided at the mutually different quantum bit substrates 30 are connected to each other via the capacitor 41 provided at the relay substrate 40. Namely, the quantum bits 1 provided at the respective quantum bit substrates 30 are connected not only to the other quantum bits 1 that are adjacent in the planar direction of the quantum bit substrate 30, but also to the other quantum bits 1 that are adjacent in the stacking direction of the substrates via a capacitor. This enables an increase in the number of bits without being subject to limitations on the layout of the quantum bit substrate 30. As a result, the number of combinations of quantum bit gates configured including plural quantum bits can be increased, enabling the computational performance of the quantum computing device 200 to be improved.

Moreover, according to the quantum computing device 200 of the exemplary embodiment of the technology of the disclosure, since the relay substrate 40 is provided with the control wiring 46 and the read wiring 48 respectively connected to the control electrode 21 and the read electrode 23 provided at the quantum bit substrate 30, access to the quantum bit 1 provided at each of the plural stacked quantum bit substrates 30 is possible.

The size of the relay substrate 40A is larger than that of the quantum bit substrate 30A. Moreover, the relay substrate 40A includes the input electrodes 60 and the output electrodes 61 at the portion that protrudes further toward the outer side, in the planar direction, than the outer edge of the quantum bit substrate 30A. This enables access to the quantum bits 1 provided at the quantum bit substrate 30B without causing interference.

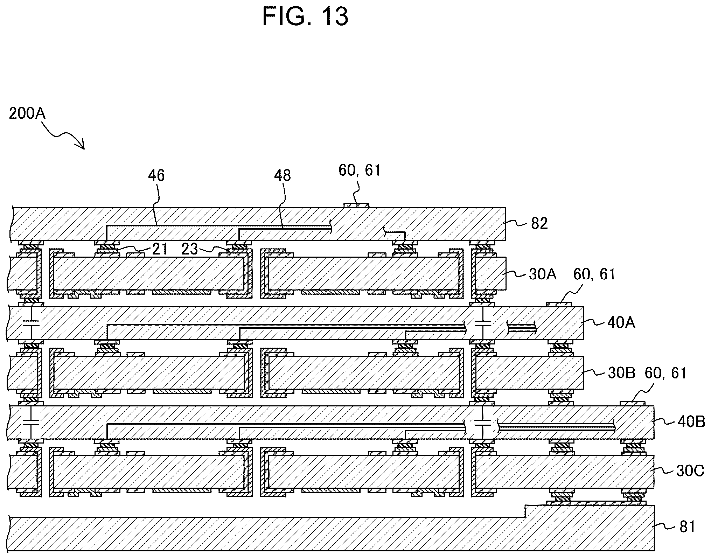

Fig. 13 is a cross-sectional view illustrating a configuration of a quantum computing device 200A according to another exemplary embodiment of the technology of the disclosure. The quantum computing device 200A includes a base substrate 81 and a cover substrate 82. The base substrate 81 is provided at a lowermost layer, and the cover substrate 82 is provided at an uppermost layer.

Inside the cover substrate 82, there is provided control wiring 46 and read wiring 48 respectively connected to the control electrode 21 and the read electrode 23 provided at the quantum bit substrate 30A. An input electrode 60 and an output electrode 61 respectively connected to the control wiring 46 and the read wiring 48 are provided at a surface of the cover substrate 82. The size of the cover substrate 82 is, for example, approximately the same as that of the quantum bit substrate 30A. The relay substrates 40A and 40B have portions that protrude further toward the outer side, in the planar direction, than the outer edges of the cover substrate 82 and the quantum bit substrate 30A, and an input electrode 60 and an output electrode 61 are provided at these portions. According to the quantum computing device 200A of the present exemplary embodiment, the stacked body including the quantum bit substrate 30 and the relay substrate 40 is protected by the base substrate 81 and the cover substrate 82.

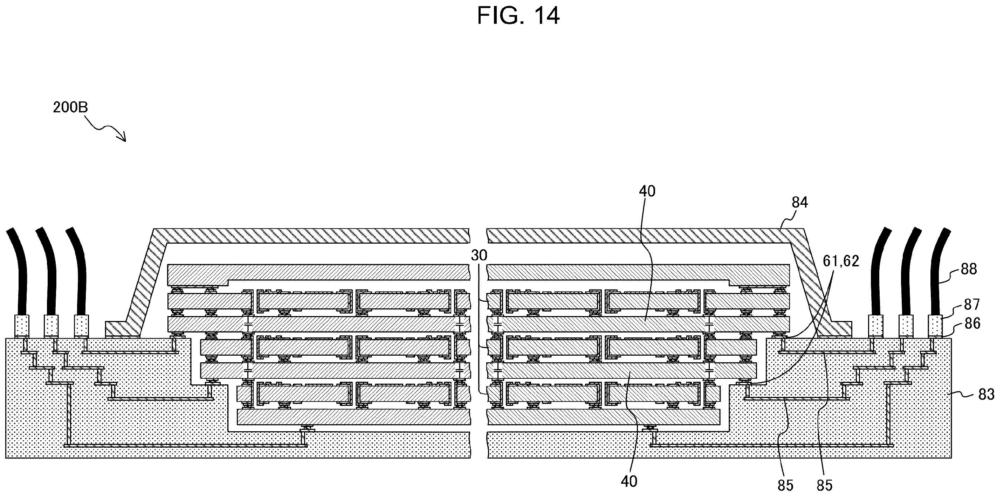

Fig. 14 is a cross-sectional view illustrating a configuration of a quantum computing device 200B according to another exemplary embodiment of the technology of the disclosure. The quantum computing device 200B includes a package substrate 83 and a cap 84. The package substrate 83 has a recessed portion corresponding to the stepped structure of the stacked body that includes the quantum bit substrates 30 and the relay substrates 40.

In a state in which the stacked body that includes the quantum bit substrates 30 and the relay substrates 40 is accommodated in the recessed portion of the package substrate 83, the input electrode 60 and the output electrode 61 provided at each of the relay substrates 40 are connected to wiring 85 formed inside the package substrate 83. The wiring 85 is connected to an external electrode 86 provided at the surface of the package substrate 83. Namely, the quantum bits provided at the respective quantum bit substrates 30 can be accessed via the external electrode 86. A cable 88 is connected to the external electrode 86 via a connector 87. The cap 84 is joined to the surface of the package substrate 83. The stacked body that includes the quantum bit substrates 30 and the relay substrates 40 is sealed within a space surrounded by the package substrate 83 and the cap 84.

The quantum computing device 200B according to the present exemplary embodiment enables access to the quantum bits provided at the respective quantum bit substrates 30 via the external electrode 86 provided at the package substrate 83. This enables connectivity to be improved with a control device (not illustrated in the drawings) that controls the quantum bits or with an inspection device (not illustrated in the drawings) that inspects the quantum computing device 200A.

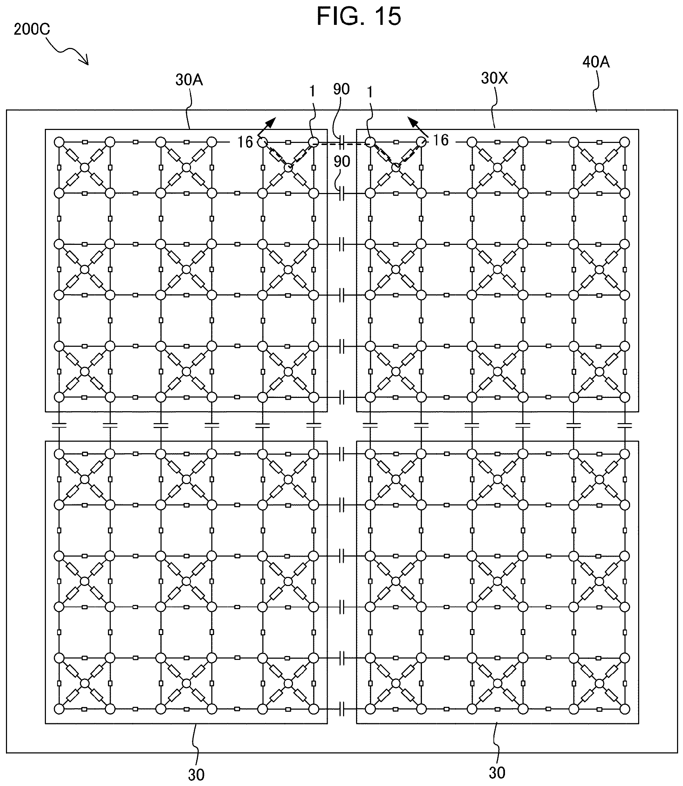

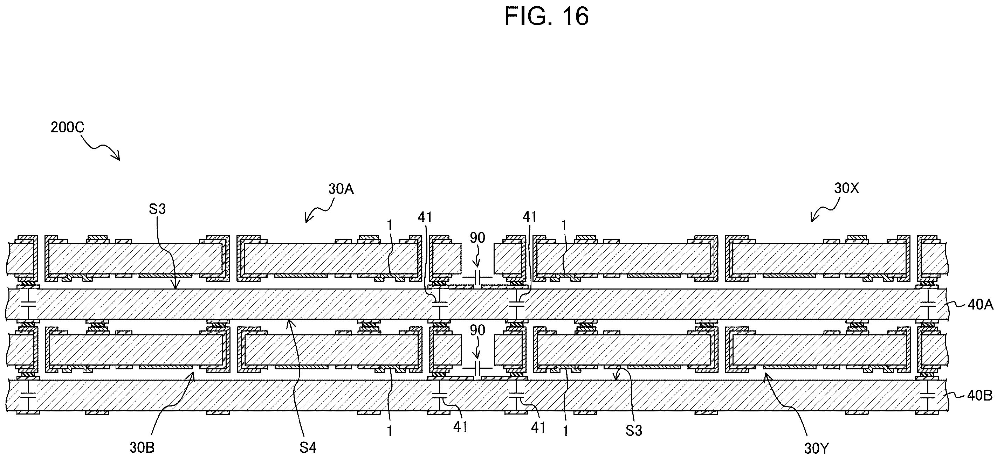

Fig. 15 is a top view illustrating a configuration of a quantum computing device 200C according to another exemplary embodiment of the technology of the disclosure. Fig. 16 is a cross-sectional view taken along line 16-16 in Fig. 15. The quantum computing device 200C includes plural quantum bit substrates 30 including quantum bit substrates 30A and 30X provided at a side of the first surface S3 of the relay substrate 40A. Moreover, the quantum computing device 200C includes plural quantum bit substrates 30 including quantum bit substrates 30B and 30Y provided at a side of the second surface S4 of the relay substrate 40A. The plural quantum bit substrates 30 including the quantum bit substrates 30B and 30Y are provided between the relay substrates 40A and 40B.

The relay substrates 40A and 40B each include plural capacitors 90 provided at the first surface S3. The capacitor 90 forms capacitive coupling between quantum bits provided at mutually different quantum bit substrates 30 mounted on the same surface of the relay substrate 40. For example, the capacitor 90 provided at the relay substrate 40A forms capacitive coupling between the quantum bits 1 provided at the quantum bit substrates 30A and 30X, respectively. The capacitor 90 provided at the relay substrate 40B forms capacitive coupling between the quantum bits 1 provided at the quantum bit substrates 30B and 30Y, respectively.

According to the quantum computing device 200C of the present exemplary embodiment, since plural quantum bit substrates 30 are arranged side by side with respect to one relay substrate 40, a further increase in the number of bits is possible.

### Second Exemplary Embodiment

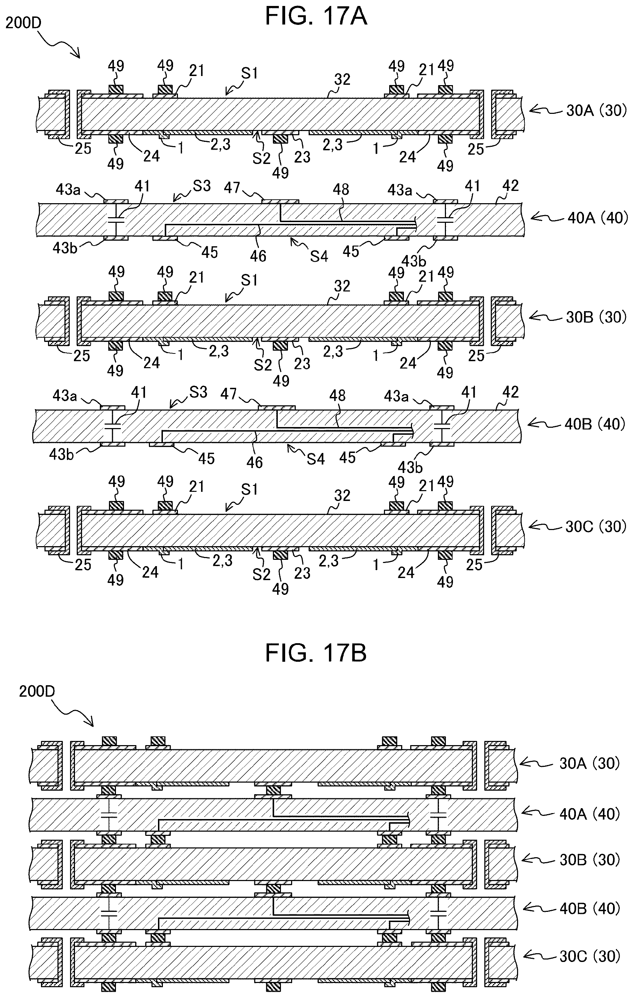

Fig. 17A and Fig. 17B are cross-sectional views illustrating an example of a configuration of a quantum computing device 200D according to a second exemplary embodiment of the technology of the disclosure. Fig. 17A is an exploded view of quantum bit substrates and relay substrates, and Fig. 17B is a diagram illustrating a state in which the quantum bit substrates and the relay substrates are joined together. The quantum computing device 200D according to the present exemplary embodiment differs from the quantum computing device 200 of the above-described first exemplary embodiment in the connection relationship between the quantum bit substrate and the relay substrate.

Fig. 17A and Fig. 17B exemplify a configuration that includes three quantum bit substrates 30A, 30B, and 30C and two relay substrates 40A and 40B. The relay substrate 40A is provided between the quantum bit substrates 30A and 30B, and the relay substrate 40B is provided between the quantum bit substrates 30B and 30C. Hereinafter, the description, the quantum bit substrate, 30 is used in cases in which the quantum bit substrates 30A, 30B, and 30C are not distinguished from each other or are collectively referred to. Similarly, the description, the relay substrate 40 is used in cases in which the relay substrates 40A and 40B are not distinguished from each other or are collectively referred to.

The quantum bit substrate 30 includes, for example, a silicon substrate as a base material 32. A control electrode 21 is provided at a first surface S1 of the base material 32, and a quantum bit 1, a resonator 2, a filter 3, a connection electrode 24, and a read electrode 23 are provided at a second surface S2 of the base material 32. The quantum bit 1 is provided directly below the control electrode 21. The control signal input to the control electrode 21 acts on the quantum bit 1 via the base material 32. A through electrode 25 is provided in the vicinity of the connection electrode 24 and is electrically connected to the connection electrode 24. The conductive path electrically connected to the quantum bit 1 by the through electrode 25 is drawn to the first surface S1 of the base material 32. This electrical connection may be a direct connection, or may be an indirect connection, such as inductive coupling or capacitive coupling.

Note that the quantum bit substrate 30B is an example of a "first quantum bit substrate" in the technology of the disclosure. The quantum bit substrate 30A is an example of a "second quantum bit substrate" in the technology of the disclosure. The quantum bit 1 provided at the quantum bit substrate 30B is an example of a "first quantum bit" in the technology of the disclosure. The quantum bit 1 provided at the quantum bit substrate 30A is an example of a "second quantum bit" in the technology of the disclosure. The control electrode 21 is an example of a "first electrode" in the technology of the disclosure. The read electrode 23 is an example of a "second electrode" in the technology of the disclosure.

In the relay substrate 40, a capacitor electrode 43a and a read wiring electrode 47 are provided on the first surface S3 of the base material 42, and a capacitor electrode 43b and a control wiring electrode 45 are provided on the second surface S4 of the base material 42.

The quantum bit substrate 30A is disposed at a side of the first surface S3 of the relay substrate 40A, and the quantum bit substrate 30B is disposed at a side of the second surface S4 of the relay substrate 40B. The quantum bit substrate 30B is disposed at a side of the first surface S3 of the relay substrate 40B, and the quantum bit substrate 30C is disposed at a side of the second surface S4 of the relay substrate 40B.

The connection electrode 24 of the quantum bit substrate 30A is joined to the capacitor electrode 43a of the relay substrate 40A via a bump 49. The connection electrode 24 of the quantum bit substrate 30B is joined to the capacitor electrode 43b of the relay substrate 40A via a bump 49. As a result, the quantum bit 1 provided at the quantum bit substrate 30A and the quantum bit 1 provided at the quantum bit substrate 30B are connected to each other via the capacitor 41 provided at the relay substrate 40A. The control electrode 21 of the quantum bit substrate 30B is joined to the control wiring electrode 45 of the relay substrate 40A via a bump 49. The control electrode 21 of the quantum bit substrate 30B is thereby connected to the control wiring 46 provided at the relay substrate 40A. The read electrode 23 of the quantum bit substrate 30A is joined to the read wiring electrode 47 of the relay substrate 40A via a bump 49. The read electrode 23 of the quantum bit substrate 30A is thereby connected to the read wiring 48 provided at the relay substrate 40A.

Similarly, the connection electrode 24 of the quantum bit substrate 30B is joined to the capacitor electrode 43a of the relay substrate 40B via a bump 49. The connection electrode 24 of the quantum bit substrate 30C is joined to the capacitor electrode 43b of the relay substrate 40B via a bump 49. As a result, the quantum bit 1 provided at the quantum bit substrate 30B and the quantum bit 1 provided at the quantum bit substrate 30C are connected to each other via the capacitor 41 provided at the relay substrate 40B. The control electrode 21 of the quantum bit substrate 30C is joined to the control wiring electrode 45 of the relay substrate 40B via a bump 49. The control electrode 21 of the quantum bit substrate 30C is thereby connected to the control wiring 46 provided at the relay substrate 40B. The read electrode 23 of the quantum bit substrate 30B is joined to the read wiring electrode 47 of the relay substrate 40B via a bump 49. The read electrode 23 of the quantum bit substrate 30B is thereby connected to the read wiring 48 provided at the relay substrate 40B.

Note that the relay substrate 40A is an example of a "first relay substrate" in the technology of the disclosure. The relay substrate 40B is an example of a "second relay substrate" in the technology of the disclosure. The control wiring 46 is an example of "first wiring" in the technology of the disclosure. The read wiring 48 is an example of "second wiring" in the technology of the disclosure. The capacitor 41 provided at the relay substrate 40A is an example of a "first capacitor" in the technology of the disclosure. The capacitor 41 provided in the relay substrate 40B is an example of a "second capacitor" in the technology of the disclosure.

The quantum computing device 200D according to the present exemplary embodiment has the following configuration, similarly to the quantum computing device 200 according to the first exemplary embodiment. Namely, in the quantum computing device 200D, the size of the relay substrate 40A is larger than that of the quantum bit substrate 30A. Moreover, for example, it is approximately the same as the quantum bit substrate 30B. Further, the relay substrate 40A includes an input electrode (not illustrated in the drawings) and an output electrode (not illustrated in the drawings) connected to the control wiring 46 and the read wiring 48, respectively, at a portion that protrudes further toward the outer side, in the planar direction, than the outer edge of the quantum bit substrate 30A. The size of relay substrate 40B is larger than that of the quantum bit substrate 30B and the relay substrate 40A. Moreover, for example, it is approximately the same as the quantum bit substrate 30C. The relay substrate 40B includes an input electrode (not illustrated in the drawings) and an output electrode (not illustrated in the drawings) connected to the control wiring 46 and the read wiring 48, respectively, at a portion that protrudes further toward the outer side, in the planar direction, than the outer edges of the quantum bit substrate 30B and the relay substrate 40A. The relay substrates 40A and 40B may include capacitors for forming capacitive coupling between quantum bits provided at mutually different quantum bit substrates mounted on the same surface of the relay substrate 40.

Explanation follows regarding joining between the quantum bit substrate 30 and the relay substrate 40, with reference to Fig. 17A and Fig. 17B. Bumps 49 are respectively formed at the surfaces of the control electrode 21, the read electrode 23, and the connection electrode 24 of the quantum bit substrate 30. For example, In can be used as a material for the bumps 49. The bumps 49 are patterned by, for example, a lift-off method.

Next, the connection electrode 24 of the quantum bit substrate 30A and the capacitor electrode 43a of the relay substrate 40A, and the read electrode 23 of the quantum bit substrate 30A and the read wiring electrode 47 of the relay substrate 40A, are joined together via bumps 49. This enables the quantum bit substrate 30A and the relay substrate 40A to be joined together. The read electrode 23 of the quantum bit substrate 30A is connected to the read wiring 48 of the relay substrate 40A.

Next, the capacitor electrode 43b of the relay substrate 40A and the connection electrode 24 of the quantum bit substrate 30B, and the control wiring electrode 45 of the relay substrate 40A and the control electrode 21 of the quantum bit substrate 30B, are joined together, respectively, via bumps 49. This enables the relay substrate 40A and the quantum bit substrate 30B to be joined together. The control electrode 21 of the quantum bit substrate 30B is connected to the control wiring 46 of the relay substrate 40A. The quantum bit 1 provided at the quantum bit substrate 30A and the quantum bit 1 provided at the quantum bit substrate 30B are connected to each other via a capacitor 41 provided at the relay substrate 40A.

Next, the connection electrode 24 of the quantum bit substrate 30B and the capacitor electrode 43a of the relay substrate 40B, and the read electrode 23 of the quantum bit substrate 30B and the read wiring electrode 47 of the relay substrate 40B, are joined together via bumps 49. This enables the quantum bit substrate 30B and the relay substrate 40B to be joined together. The read electrode 23 of the quantum bit substrate 30B is connected to the read wiring 48 of the relay substrate 40B.

Next, the capacitor electrode 43b of the relay substrate 40B and the connection electrode 24 of the quantum bit substrate 30C, and the control wiring electrode 45 of the relay substrate 40B and the control electrode 21 of the quantum bit substrate 30C, are joined together, respectively, via bumps 49. This enables the relay substrate 40B and the quantum bit substrate 30C to be joined together. The control electrode 21 of the quantum bit substrate 30C is connected to the control wiring 46 of the relay substrate 40B. The quantum bit 1 provided at the quantum bit substrate 30B and the quantum bit 1 provided at the quantum bit substrate 30C are connected to each other via a capacitor 41 provided at the relay substrate 40B. For example, an ultrasonic joining method can be used to join the electrodes between the quantum bit substrate 30 and the relay substrate 40. Note that adjacent substrates may be joined together collectively in a state in which the plural quantum bit substrates 30 and the plural relay substrates 40 are alternately stacked.

Similarly to the quantum computing device 200 according to the first exemplary embodiment, the quantum computing device 200D according to the present exemplary embodiment enables an increase in the number of bits without being subject to limitations on the layout of the quantum bit substrate 30. As a result, the number of combinations of quantum bit gates configured including plural quantum bits can be increased, enabling the computation performance of the quantum computing device 200D to be improved. Moreover, the relay substrate 40 is provided with the control wiring 46 and the read wiring 48 respectively connected to the control electrode 21 and the read electrode 23 provided at the quantum bit substrate 30, enabling access to the quantum bit 1 provided at each of the plural stacked quantum bit substrates 30.

### Description of Reference Numerals

- 1: Quantum bit
- 21: Control electrode
- 22: Ground electrode
- 23: Read electrode
- 24: Connection electrode
- 30, 30A, 30B, 30C: Quantum bit substrates
- 40, 40A, 40B, 40C: Relay substrates
- 41: Capacitor
- 46: Control wiring
- 48: Read wiring
- 60: Input electrode
- 61: Output electrode
- 90: Capacitor
- 200, 200A, 200B, 200C, 200D: Quantum computing devices

## Claims

1. A quantum computing device comprising a first quantum bit substrate and a first relay substrate which are stacked,
wherein the first quantum bit substrate comprises:
a first quantum bit;
a first electrode;
a second electrode; and
a third electrode,
and wherein the first relay substrate comprises:
first wiring that is connected to the first electrode and to which a control signal for controlling the first quantum bit is input;
second wiring that is connected to the second electrode and that is for reading a response signal indicating a quantum state of the first quantum bit; and
a first capacitor that is connected to the third electrode and that is for capacitively coupling the first quantum bit and a second quantum bit.

2. The quantum computing device according to claim 1, wherein:
the quantum computing device further comprises a second quantum bit substrate that is provided sandwiching the first relay substrate between the first quantum bit substrate and that includes the second quantum bit; and
the second quantum bit is connected to the first quantum bit via the first capacitor.

3. The quantum computing device according to claim 2, wherein a size of the first relay substrate is larger than the second quantum bit substrate.

4. The quantum computing device according to claim 3, wherein the first relay substrate comprises, at a portion that protrudes further toward an outer side, in a planar direction, than an outer edge of the second quantum bit substrate, a plurality of electrodes respectively connected to the first wiring and the second wiring.

5. The quantum computing device according to claim 1, wherein the first relay substrate comprises a capacitor for forming capacitive coupling between quantum bits provided at mutually different quantum bit substrates mounted at a same surface of the first relay substrate.

6. A method of manufacturing a quantum computing device in which a first quantum bit substrate and a first relay substrate are stacked,
wherein the first quantum bit substrate comprises:
a first quantum bit;
a first electrode;
a second electrode; and
a third electrode,
wherein the first relay substrate comprises:
first wiring to which a control signal for controlling the first quantum bit is input;
second wiring for reading a response signal indicating a quantum state of the first quantum bit; and
a first capacitor for capacitively coupling the first quantum bit and a second quantum bit,
and wherein the first quantum bit substrate and the first relay substrate are stacked such that the first electrode and the first wiring are connected, the second electrode and the second wiring are connected, and the third electrode and the first capacitor are connected.

7. A quantum computing device comprising a first quantum bit substrate, a second quantum bit substrate, and a first relay substrate that is provided between the first quantum bit substrate and the second quantum bit substrate,
wherein the first quantum bit substrate comprises:
a first quantum bit; and
a first electrode,
wherein the second quantum bit substrate comprises:
a second quantum bit; and
a second electrode,
and wherein the first relay substrate comprises:
first wiring that is connected to the first electrode and to which a control signal for controlling the first quantum bit is input;
second wiring that is connected to the second electrode and that is for reading a response signal indicating a quantum state of the second quantum bit; and
a first capacitor for capacitively coupling the first quantum bit and the second quantum bit.

8. The quantum computing device according to claim 7, wherein a size of the first relay substrate is larger than the second quantum bit substrate.

9. The quantum computing device according to claim 8, wherein the first relay substrate comprises, at a portion that protrudes further toward an outer side, in a planar direction, than an outer edge of the second quantum bit substrate, a plurality of electrodes respectively connected to the first wiring and the second wiring.

10. The quantum computing device according to claim 7, wherein the first relay substrate comprises a capacitor for forming capacitive coupling between quantum bits provided at mutually different quantum bit substrates mounted at a same surface of the first relay substrate.

11. A method of manufacturing a quantum computing device that comprises a first quantum bit substrate, a second quantum bit substrate, and a first relay substrate that is provided between the first quantum bit substrate and the second quantum bit substrate,
wherein the first quantum bit substrate comprises:
a first quantum bit; and
a first electrode,
wherein the second quantum bit substrate comprises:
a second quantum bit; and
a second electrode,
wherein the first relay substrate comprises:
first wiring to which a control signal for controlling the first quantum bit is input;
second wiring for reading a response signal indicating a quantum state of the second quantum bit; and
a first capacitor for capacitively coupling the first quantum bit and the second quantum bit,
and wherein the first quantum bit substrate, the first relate substrate, and the second quantum bit substrate are stacked such that the first electrode and the first wiring are connected and the second electrode and the second wiring are connected.
